# EUROPEAN PATENT SPECIFICATION

(11) **EP 1 172 270 B1**
(45) Date of publication and mention of the grant of the patent: **13.08.2003**
(21) Application number: 01304520.8
(22) Date of filing: 23.05.2001
(51) Int. Cl.: B60R 25/10, B60R 25/04

(54) **Equipment control based on location and personnel conditions**
Orts- und personenabhängige Gerätekontrolle
Contrôle d'équipements en fonction de l'emplacement et du personnel

(30) Priority: 24.05.2000 GB 0012445
(43) Date of publication of application: 16.01.2002
(73) Proprietor: Hewlett-Packard Company, Palo Alto, CA 94304 (US)
(72) Inventor: Crouch, Simon Edwin, Stoke Bishop, Bristol BS9 1HD (GB); Vickers, Paul, Clevedon, Somerset BS21 7DY (GB); Waters, John Deryk, Combe Down, Bath BAS 5AN (GB); Thomas, Andrew, Los Altos, California 94024-5940 (US); McDonnell, James Thomas Edward, Clifton, Bristol BS8 2JU (US)
(74) Representative: Squibbs, Robert Francis

(56) References cited:
- WO-A-94/26567
- GB-A- 2 305 285
- US-A- 5 532 690
- US-A- 5 790 074
- US-A- 5 922 073
- US-A- 6 067 007

## Description

### Field of the Invention

The present invention relates to the enabling of equipment functionality in dependence on the fulfillment of predetermined conditions, including a location condition.

### Background of the Invention

Communication infrastructures suitable for mobile users (in particular, though not exclusively, cellular radio infrastructures) have now become widely adopted. Whilst the primary driver has been mobile telephony, the desire to implement mobile data-based services over these infrastructures, has led to the rapid development of data-capable bearer services across such infrastructures. This has opened up the possibility of many Internet-based services being available to mobile users.

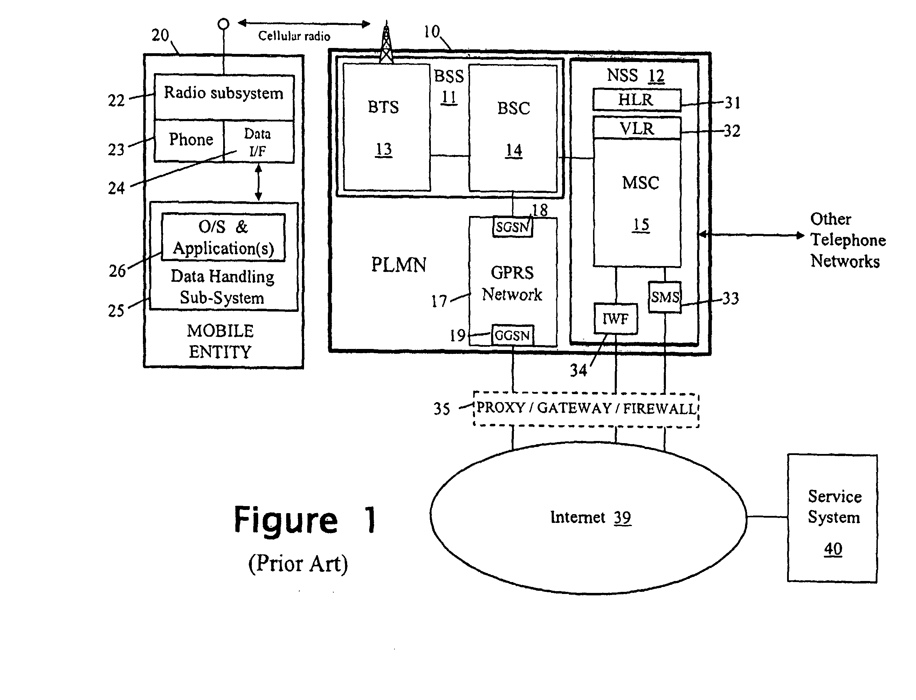

By way of example, Figure 1 shows one form of known communication infrastructure for mobile users providing both telephony and data-bearer services. In this example, a mobile entity 20, provided with a radio subsystem 22 and a phone subsystem 23, communicates with the fixed infrastructure of GSM PLMN (Public Land Mobile Network) 10 to provide basic voice telephony services. In addition, the mobile entity 20 includes a data-handling subsystem 25 interworking, via data interface 24, with the radio subsystem 22 for the transmission and reception of data over a data-capable bearer service provided by the PLMN; the data-capable bearer service enables the mobile entity 20 to communicate with a service system 40 connected to the public Internet 39. The data handling subsystem 25 supports an operating environment 26 in which applications run, the operating environment including an appropriate communications stack.

More particularly, the fixed infrastructure 10 of the GSM PLMN comprises one or more Base Station Subsystems (BSS) 11 and a Network and Switching Subsystem NSS 12. Each BSS 11 comprises a Base Station Controller (BSC) 14 controlling multiple Base Transceiver Stations (BTS) 13 each associated with a respective "cell" of the radio network. When active, the radio subsystem 22 of the mobile entity 20 communicates via a radio link with the BTS 13 of the cell in which the mobile entity is currently located. As regards the NSS 12, this comprises one or more Mobile Switching Centers (MSC) 15 together with other elements such as Visitor Location Registers 32 and Home Location Register 31.

When the mobile entity 20 is used to make a normal telephone call, a traffic circuit for carrying digitised voice is set up through the relevant BSS 11 to the NSS 12 which is then responsible for routing the call to the target phone (whether in the same PLMN or in another network).

With respect to data transmission to/from the mobile entity 20, in the present example three different data-capable bearer services are depicted though other possibilities exist. A first data-capable bearer service is available in the form of a Circuit Switched Data (CSD) service; in this case a full traffic circuit is used for carrying data and the MSC 32 routes the circuit to an InterWorking Function IWF 34 the precise nature of which depends on what is connected to the other side of the IWF. Thus, IWF could be configured to provide direct access to the public Internet 39 (that is, provide functionality similar to an IAP - Internet Access Provider IAP). Alternatively, the IWF could simply be a modem connecting to a PSTN; in this case, Internet access can be achieved by connection across the PSTN to a standard IAP.

A second, low bandwidth, data-capable bearer service is available through use of the Short Message Service that passes data carried in signalling channel slots to an SMS unit 33 which can be arranged to provide connectivity to the public Internet 39.

A third data-capable bearer service is provided in the form of GPRS (General Packet Radio Service which enables IP (or X.25) packet data to be passed from the data handling system of the mobile entity 20, via the data interface 24, radio subsystem 21 and relevant BSS 11, to a GPRS network 17 of the PLMN 10 (and vice versa). The GPRS network 17 includes a SGSN (Serving GPRS Support Node) 18 interfacing BSC 14 with the network 17, and a GGSN (Gateway GPRS Support Node) 19 interfacing the network 17 with an external network (in this example, the public Internet 39). Full details of GPRS can be found in the ETSI (European Telecommunications Standards Institute) GSM 03.60 specification. Using GPRS, the mobile entity 20 can exchange packet data via the BSS 11 and GPRS network 17 with entities connected to the public Internet 39.

The data connection between the PLMN 10 and the Internet 39 will generally be through a firewall 35 with proxy and/or gateway functionality.

Different data-capable bearer services to those described above may be provided, the described services being simply examples of what is possible.

In Figure 1, a service system 40 is shown connected to the Internet 40, this service system being accessible to the OS/application 26 running in the mobile entity by use of any of the data-capable bearer services described above. The data-capable bearer services could equally provide access to a service system that is within the domain of the PLMN operator or is connected to another public or private data network.

With regard to the OS/application software 26 running in the data handling subsystem 25 of the mobile entity 20, this could, for example, be a WAP application running on top of a WAP stack where "WAP" is the Wireless Application Protocol standard. Details of WAP can be found, for example, in the book "Official Wireless Application Protocol" Wireless Application Protocol Forum, Ltd published 1999 Wiley Computer Publishing. Where the OS/application software is WAP compliant, the firewall will generally also serve as a WAP proxy and gateway. Of course, OS/application 26 can comprise other functionality (for example, an e-mail client) instead of, or additional to, the WAP functionality.

The mobile entity 20 may take many different forms. For example, it could be two separate units such as a mobile phone (providing elements 22-24) and a mobile PC (data-handling system 25) coupled by an appropriate link (wireline, infrared or even short range radio system such as Bluetooth). Alternatively, mobile entity 20 could be a single unit such as a mobile phone with WAP functionality. Of course, if only data transmission/reception is required (and not voice), the phone functionality 24 can be omitted; an example of this is a PDA with built-in GSM data-capable functionality whilst another example is a digital camera (the data-handling subsystem) also with built-in GSM data-capable functionality enabling the upload of digital images from the camera to a storage server.

Whilst the above description has been given with reference to a PLMN based on GSM technology, it will be appreciated that many other cellular radio technologies exist and can typically provide the same type of functionality as described for the GSM PLMN 10.

Recently, much interest has been shown in "location-based", "location-dependent", or "location-aware" services for mobile users, these being services that take account of the current location of the user (or other mobile party). The most basic form of this service is the emergency location service whereby a user in trouble can press a panic button on their mobile phone to send an emergency request-for-assistance message with their location data appended. Another well known location-based service is the provision of traffic and route-guiding information to vehicle drivers based on their current position. A further known service is a "yellow pages" service where a user can find out about amenities (shops, restaurants, theatres, etc.) local to their current location. The term "location-aware services" will be used herein to refer generically to these and similar services where a location dependency exists.

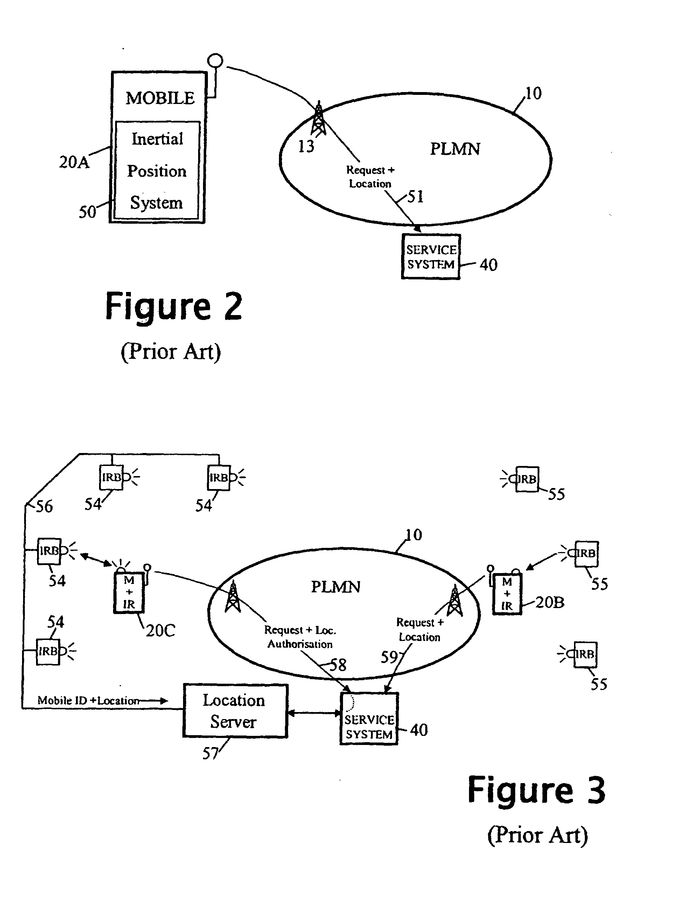

Location-aware services all require user location as an input parameter. A number of methods already exist for determining the location of a mobile user as represented by an associated mobile equipment. Example location-determining methods will now be described with reference to Figures 2 to 5. As will be seen, some of these methods result in the user knowing their location thereby enabling them to transmit it to a location-aware service they are interested in receiving, whilst other of the methods result in the user's location becoming known to a network entity from where it can be supplied directly to a location-aware service (generally only with the consent of the user concerned). It is to be understood that additional methods to those illustrated in Figures 2 to 5 exist.

As well as location determination, Figures 2 to 5 also illustrate how the mobile entity requests a location-aware service provided by service system 40. In the present examples, the request is depicted as being passed over a cellular mobile network (PLMN 10) to the service system 40. The PLMN is, for example, similar to that depicted in Figure 1 with the service request being made using a data-capable bearer service of the PLMN. The service system 40 may be part of the PLMN itself or connected to it through a data network such as the public Internet. It should, however, be understood that infrastructure other than a cellular network may alternatively be used for making the service request

The location-determining method illustrated in Figure 2 uses an inertial positioning system 50 provided in the mobile entity 20A, this system 50 determining the displacement of the mobile entity from an initial reference position. When the mobile entity 20A wishes to invoke a location-aware service, it passes its current position to the corresponding service system 40 along with the service request 51. This approach avoids the need for an infrastructure to provide an external frame of reference; however, cost, size and long-term accuracy concerns currently make such systems unattractive for incorporation into mass-market handheld devices.

Figure 3 shows two different location-determining methods both involving the use of local, fixed-position, beacons here shown as infra-red beacons IRD though other technologies, such as short-range radio systems (in particular, "Bluetooth" systems) mayequally be used. The right hand half of Figure 3 show a number of independent beacons 55 that continually transmit their individual locations. Mobile entity 20B is arranged to pick up the transmissions from a beacon when sufficiently close, thereby establishing its position to the accuracy of its range of reception. This location data can then be appended to a request 59 made by the mobile entity 20B to a location-aware service available from service system 40. A variation on this arrangement is for the beacons 55 to transmit information which whilst not directly location data, can be used to look up such data (for example, the data may be the Internet home page URL of a store housing the beacon 55 concerned, this home page giving the store location - or at least identity, thereby enabling look-up of location in a directory service).

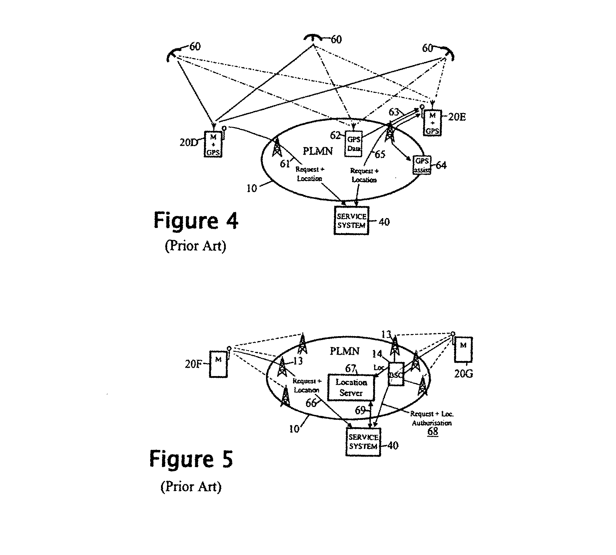

In the left-hand half of Figure 3, the IRB beacons 54 are all connected to a network that connects to a location server 57. The beacons 54 transmit a presence signal and when mobile entity 20C is sufficiently close to a beacon to pick up the presence signal, it responds by sending its identity to the beacon. (Thus, in this embodiment, both the beacons 54 and mobile entity 20C can both receive and transmit IR signals whereas beacons 55 only transmit, and mobile entity 20B only receives, IR signals). Upon a beacon 54 receiving a mobile entity's identity, it sends out a message over network 56 to location server 57, this message linking the identity of the mobile entity 20C to the location of the relevant beacon 54. Now when the mobile entity wishes to invoke a location-aware service provided by the service system 40, since it does not know its location it must include it's identity in the service request 58 and rely on the service system 40 to look up the current location of the mobile entity in the location server 57. Because location data is personal and potentially very sensitive, the location server 57 will generally only supply location data to the service system 40 after the latter has produced an authorizing token supplied by the mobile entity 20B in request 58. It will be appreciated that whilst service system 40 is depicted as handling service requests form both types of mobile entity 20 B and 20C, separate systems 40 may be provided for each mobile type (this is likewise true in respect of the service systems depicted in Figures 4 and 5).

Figure 4 depicts several forms of GPS location-determining system. On the left-hand side of Figure 4, a mobile entity 20D is provided with a standard GPS module and is capable of determining the location of entity 20D by picking up signals from satellites 60. The entity 20D can then supply this location when requesting, in request 61, a location-aware service from service system 40.

The right-hand side of Figure 4 depicts, in relation to mobile entity 20E, two ways in which assistance can be provided to the entity in deriving location from GPS satellites. Firstly, the PLMN 10 can be provided with fixed GPS receivers 62 that each continuously keep track of the satellites 60 visible from the receiver and pass information in messages 63 to local mobile entities 20E as to where to look for these satellites and estimated signal arrival times; this enables the mobile entities 20E to substantially reduce acquisition time for the satellites and increase accuracy of measurement (see "Geolocation Technology Pinpoints Wireless 911 calls within 15 Feet" 1-Jul-99 Lucent Technologies, Bell Labs). Secondly, as an alternative enhancement, the processing load on the mobile entity 20E can be reduced and encoded jitter removed using the services of network entity 64 (in or accessible through PLMN 10).

One the mobile unit 20E has determined its location, it can pass this information in request 5 65 when invoking a location-aware service provided by service system 40.

Figure 5 depicts two general approaches to location determination from signals present in a cellular radio infrastructure. First, it can be noted that in general both the mobile entity and the network will know the identity of the cell in which the mobile entity currently 0 resides, this information being provided as part of the normal operation of the system. (Although in a system such as GSM, the network may only store current location to a resolution of a collection of cells known as a "location area", the actual current cell ID will generally be derivable from monitoring the signals exchanged between the BSC 14 and the mobile entity). Beyond current basic cell ID, it is possible to get a more accurate fix by measuring timing and/or directional parameters between the mobile entity and multiple BTSs 13, these measurement being done either in the network or the mobile entity (see, for example, International Application WO 99/04582 that describes various techniques for effecting location determination in the mobile and WO 99/55114 that describes location determination by the mobile network in response to requests made by location-aware applications to a mobile location center - server- of the mobile network).

The left-hand half of Figure 5 depicts the case of location determination being done in the mobile entity 20F by, for example, making Observed Time Difference (OTD) measurements with respect to signals from BTSs 13 and calculating location using a knowledge of BTS locations. The location data is subsequently appended to a service request 66 sent to service system 40 in respect of a location-aware service. The calculation load on mobile entity 20F could be reduced and the need for the mobile to know BTS locations avoided, by having a network entity do some of the work. The right-hand half of Figure 5 depicts the case of location determination being done in the network, for example, by making Timing Advance measurements for three BTSs 13 and using these measurements to derive location (this derivation typically being done in a unit associated with BSC 14). The resultant location data is passed to a location server 67 from where it can be made available to authorised services. As for the mobile entity 20C in Figure 3, when the mobile entity 20G of Figure 5 wishes to invoke a location-aware service available on service system 50, it sends a request 69 including an authorisation token and its ID (possible embedded in the token) to the service system 40; the service system then uses the authorisation token to obtain the current location of the mobile entity 20G from the location server 67.

In the above examples, where the mobile entity is responsible for determining location, this will generally be done only at the time the location-aware service is being requested. Where location determination is done by the infrastructure, it may be practical for systems covering only a limited number of users (such as the system illustrated in the left-hand half of Figure 2 where a number of infrared beacons 54 will cover a generally fairly limited) for location-data collection to be done whenever a mobile entity is newly detected by an IRB, this data being passed to location server 57 where it is cached for use when needed. However, for systems covering large areas with potentially a large number of mobile entities, such as the Figure 5 system, it is more efficient to effect location determination as and when there is a perceived need to do so; thus, location determination may be triggered by the location server 67 in response to the service request 68 from the mobile entity 20G or the mobile entity may, immediately prior to making request 68, directly trigger BSC 14 to effect a location determination and feed the result to location server 67.

Further with respect to the location servers 57, 67, whilst access authorisation by location-aware services has been described as being through authorisation tokens supplied by the mobile entities concerned, other authorisation techniques can be used. In particular, a location-aware service can be prior authorised with the location server in respect of particular mobile entities; in this case, each request from the service for location data needs only to establish that the request comes from a service authorised in respect of the mobile entity for which the location data is requested.

As already indicated, Figures 2 to 5 depict only some examples of how location determination can be achieved, there being many other possible combinations of technology used and where in the system the location-determining measurements are made and location is calculated, stored and used .Thus, the location-aware service may reside in the mobile entity whose location is of interest, in a network-connected service system 40 (as illustrated), or even in another mobile entity. Furthermore, whilst in the examples of Figures 2 to 5, invocation of the location-aware service has been by the mobile entity whose location is of interest, the nature of the location-aware service maybe such that it is invoked by another party (including, potentially, the PLMN itself). In this case, unless the invoking party already knows the location of he mobile entity and can pass this information to the location-aware service (which may, for example, maybe situation where the PLMN invokes the service), it is the location-aware service that is responsible for obtaining the required location data, either by sending a request to the mobile entity itself or by requesting the data from a location server. Unless the location server already has the needed information in cache, the server proceeds to obtain the data either by interrogating the mobile entity or by triggering infrastructure elements to locate the mobile. For example, where a location-aware service running on service system 40 in Figure 5 needs to find the location of mobile 20G, it could be arranged to do so by requesting this information from location server 67 which in turn requests the location data from the relevant BSC, the latter then making the necessary determination using measurements from BTSs 13.

Although in the foregoing, the provision of location data through the mobile radio infrastructure to the mobile entity has been treated as a service effected over a data-capable bearer channel, it may be expected that as location data becomes considered a basic element of mobile radio infrastructure services, provision will be made in the relevant mobile radio standards for location data to be passed over a signalling channel to the mobile entity.

It is known to limit the operation of equipment such as motor vehicles to certain localities by comparing the location of the equipment with predetermined authorised locations or localities. Thus, for example, GB-A-2 305 285 discloses a security arrangement for a vehicle in which the vehicle's position is determined by a GPS system and compared with pre-defined zones in which the vehicle is authorised to travel. If the vehicle is outside its permitted zones the vehicle is immobilised when next in a safe state to do so.

WO-A-94 26567 also discloses a vehicle anti-theft system that only permits movement of the vehicle when the user is an authorised user as indicated by an electronic key such as a magnetic card, and the vehicle is in an authorised locality.

US-A-5 532 690 also discloses apparatus for monitoring and bounding the path of a ground vehicle. A kill switch mechanism is provided for disabling the ground vehicle when the current ground position of the ground vehicle is outside of the bounded area of permitted operation. US-A-6 067 007 describes a vehicle security system that includes a passive operator identification device such as a key provided with a transponder, this device being operative upon the key being inserted in a lock switch of the vehicle, to transmit a code to the vehicle security system.. If this code does not match a stored code indicative of an authorised user, an alarm signal including the location of the vehicle is transmitted to a monitoring station and the vehicle is disabled.

US-A-5 922 073 describes apparatus provided with an access permission unit for controlling access to data items available to the apparatus. Each data item has associated attribute data that defines both a password needed to access the data and the location(s) where access is permitted. When a user operates an input unit of the apparatus to access a data item, the access permission unit only affords access to the item of interest if the user has entered the appropriate password and is using the apparatus in an authorised location.

It is an object of the present invention to provide an improved security/safety method for equipment operation by using location data.

### Summary of the Invention

According to one aspect of the present invention, there is provided a control method for enabling particular functionality of an item of equipment upon a set of conditions being satisfied, this set of conditions including both a location condition and a personnel condition, the method involving:
(a) automatically checking the location condition by:
   (i) obtaining current-location data representing the current location of the equipment; and
   (ii) comparing the current-location data with stored authorized-location data representing a predetermined authorised location or locality for operation of said functionality of the equipment;
(b) automatically checking the personnel condition;
characterised in that step (b) involves checking for the presence near the equipment or in said authorised location or locality, including in locations that are not equipment operating positions, of at least one person fitting stored authorized-personnel data that identifies specified person or persons, or a specified grade of person.

According to another aspect of the present invention, there is provided an arrangement for enabling particular functionality of an item of equipment upon a set of conditions being satisfied, this set of conditions including both a location condition and a personnel condition, the arrangement comprising:
- first condition-check means for automatically checking the location condition, the first condition-check means comprising:
   - a location-data store for storing authorized-location data representing a predetermined authorised location or locality for operation of said functionality of the equipment,
   - current-location means for obtaining current-location data representing the current location of the equipment; and
   - location-comparison means for comparing the current-location data with stored;
- second condition-check means for automatically checking the personnel condition, the second condition-check means including a store for authorized-personnel data that identifies specified person or persons, or a specified grade of person; and
- enabling means arranged to cause enablement of said particular functionality of the equipment upon both the first and second condition-check means each indicating that the condition checked by it is satisfied;
characterised in that the second condition-check means is arranged to check for the presence near the equipment or in said authorised location or locality, including in locations that are not equipment operating positions, of at least one person fitting the stored authorized-personnel data.

### Brief Description of the Drawings

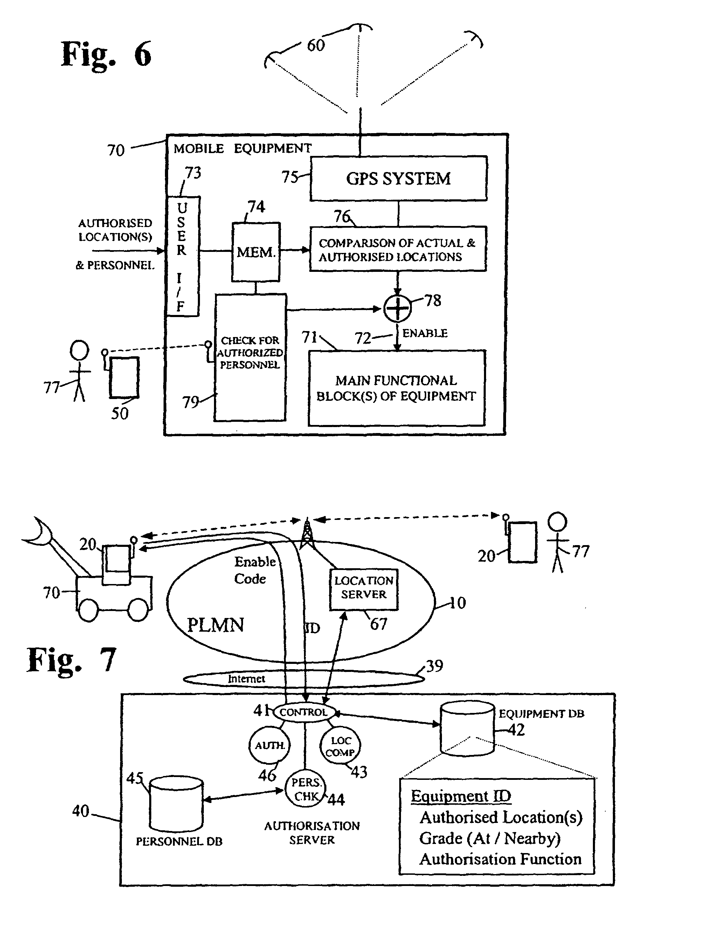

A method, equipment and service-system, both embodying the present invention, for condition-based equipment control, will now be described, by way of non-limiting example, with reference to the accompanying diagrammatic drawings, in which:
. **Figure 1** is a diagram of a known communications infrastructure usable for transferring voice and data to/from a mobile entity;
. **Figure 2** is a diagram illustrating one known approach to determining the location of a mobile entity, this approach involving providing the entity with an inertial positioning system;
. **Figure 3** is a diagram illustrating another known approach to determining the location of a mobile entity, this approach being based on proximity of the mobile entity to fixed-position local beacons;
. **Figure 4** is a diagram illustrating a further known approach to determining the location of a mobile entity, this approach involving the use of GPS satellites;
. **Figure 5** is a diagram illustrating a still further approach to determining the location of a mobile entity, this approach being based on the use of signals present in a cellular mobile radio communications system;
. **Figure 6** is a diagram illustrating a first embodiment of the invention; and
. **Figure 7** is a diagram illustrating a second embodiment of the invention.

### Best Mode of Carrying Out the Invention

In certain situations it is desirable to limit the operational capabilities of an item of movable equipment to certain locations - for example, to prevent theft, it would be useful to limit operation of a mechanical digger to the site where is was currently being legitimately employed. However, security and safety considerations may also lead to a requirement that the equipment only be operated when a particular person or grade of personnel (such as a foreman) is present or nearby.

As will be described below, embodiments of the present invention provide ways oftesting both that the equipment is at an authorized working location (the 'location' condition) and that particular personnel (grade or individuals) is present (the 'personnel'condition), the equipment only being enabled when both conditions are satisfied.

The authorized location requirement is tested for by deriving the location of the equipment concerned and comparing it with predetermined authorized-locations data that specifies where the equipment is authorized for use. Current location data about the equipment can be derived by the equipment itself or by a communications infrastructure (e.g. cellular radio network) with which the equipment communicates. As regards the authorised-locations data, this can be:
- held in the equipment (and potentially modifiable under password control);
- held at a remote server to which the equipment must refer; in this case, a reference identifying what authorised-locations data is relevant must be passed to the server (this reference could identify the equipment or a particular user). The identifying reference may be provided from the equipment itself or from the communications infrastructure if known to the latter.

The comparison of equipment current location and the authorized location data can be effected at the equipment itself or at a remote authorization server; in this latter case, the server returns an authorization code only when the equipment location corresponds to the authorized location data (and subject to any other conditions tested for by the remote system being satisfied).

As regards the requirement that a particular person or grade of person being present at or near the equipment (though not necessarily operating the equipment), data concerning such authorized personnel can be stored either in the equipment or at a remoter service system, in much the same way as for the authorized-location data. The testing for the presence of an authorized person at or near the equipment can be effected either by obtaining location information about authorized personnel and comparing it with the current or authorized location of the equipment (this can be done either at the equipment or at a remote service system provided with the necessary location information), or by a check of personnel in the proximity of the equipment. Whilst generally only one specified personnel will required to be present at or near the equipment for the personnel condition to be satisfied, it is possible to require two or more such personnel to be simultaneously present.

Considering now the first embodiment of the invention shown in Figure 6, in this embodiment both the authorized location data and the authorized personnel data are stored in the equipment 70 concerned (for example, a mechanical digger) and the location and personnel checks are both carried out at the equipment itself. By way of example, the authorized location is defined as being within a one kilometer radius of a specified point and the authorized personnel are defined by the identities of specific individuals.

The mobile equipment 70 comprises functionality 71 (such as engine management system) that must be enabled by the presence of an enable signal on line 72 for it to function. Authorized location and personnel data is set into the equipment via user interface 73 under password control and is stored in memory 74; if the mobile equipment is provided with remote communication means, such as mobile radio the authorized location and personnel data can be arranged to be updated remotely.

The current location of the equipment 70 is obtained via a GPS system 75. The current location data and the authorized location data are fed to comparison unit 76 which ascertains whether the equipment is located in an authorized location; if it is, unit 76 produces an enabling output which it passes to logical AND function 78.

A personnel check sub-system 79 includes a short-range transceiver (such as a Bluetooth transceiver) by which it can communicate with complementary transceivers 50 carried by persons 77 the vicinity of the equipment. These transceivers 50 are arranged to return the identity of the person to whom they belong when appropriately interrogated by the sub-system 79. In this manner, the sub-system can ascertain who is close by and can compare the identities of such persons with the list of authorized personnel held in memory 74. If there is a match, sub-system 79 produces an enabling output which it passes to AND function 78.

When AND function 78 receives enabling signals on both inputs it generates an ENABLE output signal to enable operation of functionality 71. In this manner, operation of the equipment is restricted to the location (locality) defined by the input authorized location data and only when an authorized person is present. The checks for authorized location and authorized personnel are preferably carried out at regular intervals, for example, every minute (thus, the AND function output is latched and held for a corresponding period).

When the equipment is moved to a new working location beyond the previously authorized location, all that is needed is for a new authorized location to be entered into memory 74, overwriting the previous data; it would also be possible to set in a set of authorized locations and then to select a currently operative one from the list. It may or may not also be necessary to update the authorized personnel information at the same time.

Where the mobile equipment is a vehicle or some other potentially dangerous equipment, it will generally be prudent to arrange for a graceful performance degradation should the equipment move from the authorized location or away from an authorized person. It is also prudent to provide an override, such as a password-based override, input of the password ensuring that the enable signal is continuously present online 72.

It will be appreciated that other forms of location discovery means could be used for the Figure 6 embodiment and, indeed, in the embodiment of Figure 7 - which also relates to an item of mobile equipment 70, such as a mechanical digger - current location information on the equipment is obtained through a location server 67 of a PLMN 10, equipment 70 being provided with a cellular radio device 20. Similarly, the check of authorized personnel can be effected by comparing the location of such personnel with the location of the equipment rather than by using the proximity checking method described.

In the Figure 7 embodiment, the location and personnel checks are effected at a remote service system which also stores the authorized location and personnel data. The operation of the embodiment is as follows. The mobile equipment 70 sends its identity ID to a remote service system (authorisation server 40) via a data-capable bearer service of PLMN 10 and internet 39. A control process 41 at the authorisation server 40 receives the ID and first does a location check by:
- obtaining the current location of the mobile equipment from location server 67 of PLMN 10,
- obtaining the authorised location for the mobile equipment by interrogating an equipment database 42 using the equipment ID.
The current and authorised locations are then compared (see block 43) and if this produces a positive result, a location-match signal is passed to the control process 41 which then proceeds with checking whether the personnel-related condition is satisfied.

When the process 41 interrogated the database 42 for authorised-location data for mobile equipment 70, it also retrieved data about the required grade of person needed to be at the equipment or in its vicinity (in this case, a foreman 77, for example). A personnel check process 44 now uses this data to identify specific employees of the appropriate grade by referring to database 45 that contains grade / employee information. A location check is then carried out for the candidate employees by an enquiry to location server 67 (employees of interest, such as foreman 77, being equipped with mobile phones 20). The returned location information is then compared against the current location of the mobile equipment or the authorised location of the latter.

Provided sufficiently accurate location information is available, it is possible to selectively require (as identified in the appropriate equipment record of database 42) the specified grade of employee to be present at the mobile equipment or merely in its vicinity.

If both the location and personnel checks are passed, the control process returns an enable code to the mobile equipment 70 to enable its operation. This code may be specific to the equipment and may be time dependent according to a function known to the equipment and to the authorisation server 40. Equipment-specific authorisation code details are held at server 40 in the corresponding equipment record in database 42 and are used by authorisation process 46 to produce the corresponding enable code for sending back via data capable bearer service of PLMN 10 to equipment 70.

The mobile equipment is arranged to periodically require re-enablement from the authorisation server 40.

It will be appreciated that many different embodiments are possible in view of the variety of ways the location information and authorized location and personnel data can be derived. For example, where the presence of an authorized person is checked for by the proximity method described above with reference to Figure 6, it may still be convenient to use a remote service system to translate equipment identity into the identities of authorized persons, these latter identities being returned to the equipment to enable it to check whether any authorized personnel are nearby.

It will be appreciated that the desired level of security will determine the details of any particular implementation (in particular, various authentication techniques may need to be used to avoid location information being falsified).

The equipment subject to the authorized location and personnel checks need not be portable or mobile equipment though this will normally be the case.

Whilst in the described embodiments the location data has been expressed in terms of absolute location data, it is also possible to use relative location data (as is effectively done regarding the required proximity of foreman 77 in the Figure 7 embodiment) and also semantic location data (for example, the authorised locations could be specified as all premises of a particular company, in which case there would need to be a translation ofthis semantic location data to real world locations through, for example, a database that specifies the absolute locations of the company's current premises).

In the described embodiment of Figure 7, communication with the authorisation server 40 has been via a cellular radio connection. It would, of course, also be possible to used a wired connection (such as a LAN connecting to the Internet) with the current location of the device concerned being obtained by any appropriate manner.

Where a piece of equipment has multiple functional units, it would be possible to locationally limit different functions of the equipment to differing extents.

It is to be understood that the present invention is not limited to the specifics ofthe mobile entity and communication infrastructure and location discovery means shown in Figures 6 and 7 and the generalisations discussed above in relation to Figures 1 to 5 regarding these elements apply equally to the operational context of the described embodiments of the invention. Furthermore, whilst the service system 40 is shown in Figure 7 as connected to the public Internet, it could be connected to a GPRS network 17 of PLMN 10 or to another fixed data network interfacing directly or indirectly with the network 17 or network 39.

## Claims

1. A control method for enabling particular functionality of an item of equipment (70) upon a set of conditions being satisfied, this set of conditions including both a location condition and a personnel condition, the method involving:
(a) automatically checking the location condition by:
(i) obtaining (67; 75) current-location data representing the current location of the equipment (70); and
(ii) comparing (43; 76) the current-location data with stored authorized-location data representing a predetermined authorised location or locality for operation of said functionality of the equipment (70);
(b) automatically checking the personnel condition;
**characterised in that** step (b) involves checking (44; 79) for the presence near the equipment (70) or in said authorised location or locality, including in locations that are not equipment operating positions, of at least one person (77) fitting stored authorized-personnel data that identifies specified person or persons, or a specified grade of person.

2. A method according to claim 1, wherein step (b) is effected by obtaining (67) location data on persons (77) covered by the authorized-personnel data (45) and comparing this data either with the current location of the equipment (70) or with said authorized-location data (42).

3. A method according to claim 1, wherein step (b) is effected by using a short-range communications system located on the equipment (70) to determine identity information about nearby persons (77), this identity information then being compared (79) against the authorized-personnel data.

4. A method according to any one of the preceding claims, wherein the authorised-location data is stored (74) in the equipment (70) itself, the equipment either determining or being passed said current-location data, and sub-step (a)(ii) being carried out at the equipment.

5. A method according to claim 4, wherein the authorised-location data is modifiable by an appropriately authorised person attending at the equipment or remotely over a communications link.

6. A method according to any one of claims 1 to 3, wherein the authorised-location data is stored (42) in a remote service system (40), the equipment having a communication subsystem enabling it to communicate with the service system (40) via a communications infrastructure (10) thereby to receive said authorised-location data and compare (43; 76) it at the equipment (70) with current-location data that the equipment has determined or obtained.

7. A method according to any one of claims 1 to 3, wherein the equipment (70) has a communication subsystem enabling it to communicate with a remote service system (40) via a communications infrastructure (10), the authorised-location data being stored (74) at the equipment (70) and being passed to the service system (40) via the communications infrastructure (10), and step (a)(ii) being carried out at the remote service system (40) with the current location data being obtained either by the equipment (70) and passed to the service system, or by the service system (40) from separate location discovery system (67).

8. A method according to claim 7, wherein the communications infrastructure is acellular radio infrastructure (10) and the communication sub-system of the equipment is a cellular radio device, the infrastructure having a location determining system (67) for determining the location of the cellular radio device and thus of the equipment (70), and the remote service system (40) obtaining said current-location data from the location determining system (67) directly.

9. A method according to any one of claims 1 to 3, wherein the equipment (70) has a communication subsystem enabling it to communicate with a remote service system (40) via a communications infrastructure (10), the authorised-location data being stored (42) at the service system (40) and being retrieved against equipment identity information received via the communications infrastructure, and step (a)(ii) being carried out at the remote service system (40) with the current location data being obtained either by the equipment (70) and passed to the service system (40), or by the service system from a separate location discovery system (67).

10. A method according to claim 9, wherein the communications infrastructure (10) is a cellular radio infrastructure and the communication sub-system of the equipment (70) is a cellular radio device, the infrastructure having a location determining system (67) for determining the location of the cellular radio device and thus of the equipment (70), and the remote service system (40) obtaining said current-location data from the location determining system (67) directly.

11. A method according to any one of the preceding claims, wherein the authorised-personnel data is stored (74) in the equipment (70) itself, and step (b) is carried out at the equipment.

12. A method according to claim 11, wherein the authorised-personnel data is modifiable by an appropriately authorised person attending at the equipment or remotely over a communications link.

13. A method according to any one of claims 1 to 10, wherein the authorised-personnel data is stored in a remote service system (40), the equipment (70) having a communication subsystem enabling it to communicate with the service system via a communications infrastructure (10) thereby to receive said authorised-personnel data and carry out step (b) at the equipment.

14. A method according to claim 2 or any one of claims 4 to 10 when dependent on claim 2, wherein the equipment (70) has a communication subsystem enabling it to communicate with a remote service system (40) via a communications infrastructure (10), the authorised-personnel data being stored (74) at the equipment and being passed to the service system via the communications infrastructure, and step (b) being carried out at the remote service system (40) with location information about authorized personnel being obtained by the service system from a location discovery system (67).

15. A method according to claim 14, wherein the communications infrastructure is a cellular radio infrastructure (10) and authorised personnel (77) are provided with respective associated cellular radio devices (50), the infrastructure having a location determining system (67) for determining the location of the cellular radio devices and thus of the authorized personnel, and the remote service system (40) carrying out step (b) by obtaining said current-location data from the location determining system (67).

16. A method according to claim 2 or any one of claims 4 to 10 when dependent on claim 2, wherein the equipment (70) has a communication subsystem enabling it to communicate with a remote service system (40) via a communications infrastructure (10), the authorised-personnel data being stored (45) at the service system (40) and being retrieved against equipment identity information received via the communications infrastructure, and step (b) being carried out at the remote service system (40) with location information about authorized personnel being obtained by the service system from a location discovery system (67).

17. A method according to claim 16, wherein the communications infrastructure is a cellular radio infrastructure (10) and authorised personnel (77) are provided with respective associated cellular radio devices (50), the infrastructure having a location determining system (67) for determining the location of the cellular radio devices and thus of the authorized personnel, and the remote service system carrying out step (b) by obtaining said current-location data from the location determining system.

18. A method according to claim 2, wherein the equipment (70) has a communication subsystem enabling it to communicate with a remote service system (40) via a communications infrastructure (10), the authorised-location data and authorized-personnel data being stored at the service system and being retrieved against equipment identity information received via the communications infrastructure, and steps (a)(ii) and (b) being carried out at the remote service system (40).

19. A method according to claim 18, wherein the communications infrastructure is a cellular radio infrastructure (10) and authorised personnel (77) are provided with respective associated cellular radio devices (50), the communication sub-system of the equipment (70) also being a cellular radio device, and the infrastructure having a location determining system (67) for determining the location of the cellular radio devices and thus of the equipment and of authorized personnel, and the remote service system (40) carrying out step (b) by obtaining said current-location data and location information about authorized personnel from the location determining system (67).

20. An arrangement for enabling particular functionality of an item of equipment (70) upon a set of conditions being satisfied, this set of conditions including both a location condition and a personnel condition, the arrangement comprising:
- first condition-check means for automatically checking the location condition, the first condition-check means comprising:
- a location-data store (42;74) for storing authorized-location data representing a predetermined authorised location or locality for operation of said functionality of the equipment (70),
- current-location means (67; 75) for obtaining current-location data representing the current location of the equipment (70); and
- location-comparison means (43; 76) for comparing the current-location data with said stored authorized-location data;
- second condition-check means (44, 79) for automatically checking the personnel condition, the second condition-check means including a store (45, 74) for authorized-personnel data that identifies specified person or persons, or a specified grade of person; and
- enabling means (41; 78) arranged to cause enablement of said particular functionality of the equipment (70) upon both the first and second condition-check means each indicating that the condition check carried out by it is satisfied;
**characterised in that** the second condition-check means (44; 79) is arranged to check for the presence near the equipment (70) or in said authorised location or locality, including in locations that are not equipment operating positions, of at least one person (77) fitting the stored authorized-personnel data.

21. An arrangement according to claim 20, wherein the arrangement is provided at said equipment (70).

22. An arrangement according to claim 20, wherein the arrangement is provided at a service system (40) and further comprises communications means for passing enabling signals from said enabling means (41) to said equipment (70) to enable said particular functionality of the equipment (70).

23. An arrangement according to claim 20, wherein the elements making up said arrangement are distributed between the equipment (70) and a service system (40), the arrangement further comprising communications means for intercommunicating the equipment (70) and service system (40)

24. An arrangement according to claim 20, wherein the second condition-check means (44) comprises means for obtaining location data on persons (77) covered by the authorized-personnel data, and means for comparing this data either with the current location of the equipment (70) or with said authorized-location data.

25. An arrangement according to claim 20, wherein the second condition-check means (79) comprises a short-range communications system located on the equipment (70) and arranged to determine identity information about nearby persons (77), and means for comparing this identity information against the authorized-personnel data,

## Patentansprüche

1. Ein Steuerungsverfahren zum Freigeben einer bestimmten Funktionalität eines Ausrüstungsgegenstandes (70) daraufhin, daß ein Satz von Bedingungen erfüllt ist, wobei dieser Satz von Bedingungen sowohl eine Ortsbedingung als auch eine Personenbedingung umfaßt, wobei das Verfahren folgende Schritte beinhaltet:
a) automatisches Prüfen der Ortsbedingung durch:
i) Erhalten (67; 75) von Gegenwärtiger-Ort-Daten, die den gegenwärtigen Ort der Ausrüstung (70) darstellen; und
ii) Vergleichen (43; 76) der Gegenwärtiger-Ort-Daten mit gespeicherten Autorisierter-Ort-Daten, die einen vorbestimmten autorisierten Ort oder eine Lokalität für eine Operation der Funktionalität der Ausrüstung (70) darstellen;
b) automatisches Prüfen der Personenbedingung;
**dadurch gekennzeichnet, daß** Schritt b) ein Prüfen (44; 79) der Präsenz mindestens einer Person (77), die auf die gespeicherten Autorisierte-Personen-Daten paßt, die eine spezifizierte Person oder Personen oder eine spezifizierte Klasse von Personen identifizieren, nahe der Ausrüstung (70) oder an dem autorisierten Ort oder der Lokalität, einschließlich an Orten, die keine Ausrüstungsbetriebspositionen sind, beinhaltet.

2. Ein Verfahren gemäß Anspruch 1, bei dem Schritt b) durch ein Erhalten (67) von Ortsdaten über Personen (77), die durch die Autorisierte-Personen-Daten (45) abgedeckt sind, und ein Vergleichen dieser Daten entweder mit dem gegenwärtigen Ort der Ausrüstung (70) oder mit den Autorisierter-Ort-Daten (42) bewirkt wird.

3. Ein Verfahren gemäß Anspruch 1, bei dem Schritt b) durch ein Verwenden eines Nahbereichskommunikationssystems, das auf der Ausrüstung (70) positioniert ist, um Identitätsinformationen über in der Nähe befindliche Personen (77) zu bestimmen, wobei diese Identitätsinformation dann gegenüber den Autorisierte-Personen-Daten verglichen werden (79), bewirkt wird.

4. Ein Verfahren gemäß einem der vorherigen Ansprüche, bei dem die Autorisierter-Ort-Daten (74) in der Ausrüstung (70) selbst gespeichert sind (40), wobei die Ausrüstung entweder die Gegenwärtiger-Ort-Daten bestimmt oder dieselben zu ihr geleitet werden, und wobei der Teilschritt a) ii) an der Ausrüstung ausgeführt wird.

5. Ein Verfahren gemäß Anspruch 4, bei dem die Autorisierter-Ort-Daten durch eine geeignet autorisierte Person, die sich an der Ausrüstung befindet, oder entfernt über eine Kommunikationsverbindung modifizierbar sind.

6. Ein Verfahren gemäß einem der Ansprüche 1 bis 3, bei dem die Autorisierter-Ort-Daten in einem entfernten Dienstsystem (40) gespeichert sind (42), wobei die Ausrüstung ein Kommunikationsteilsystem aufweist, das es derselben ermöglicht, mit dem Dienstsystem (40) über eine Kommunikationsinfrastruktur (10) zu kommunizieren, um dadurch die Autorisierter-Ort-Daten zu empfangen und dieselben an der Ausrüstung (70) mit Gegenwärtiger-Ort-Daten, die die Ausrüstung bestimmt oder erhalten hat, zu vergleichen (43; 76).

7. Ein Verfahren gemäß einem der Ansprüche 1 bis 3, bei dem die Ausrüstung (70) ein Kommunikationsteilsystem aufweist, das es derselben ermöglicht, mit einem entfernten Dienstsystem (40) über eine Kommunikationsinfrastruktur (10) zu kommunizieren, wobei die Autorisierter-Ort-Daten an der Ausrüstung (70) gespeichert sind (74) und über die Kommunikationsinfrastruktur (10) zu dem Dienstsystem (40) geleitet werden, und Schritt a) ii) an dem entfernten Dienstsystem (40) ausgeführt wird, wobei die Gegenwärtiger-Ort-Daten entweder durch die Ausrüstung (70) erhalten und an das Dienstsystem weitergeleitet oder durch das Dienstsystem (40) von einem separaten Ortsentdeckungssystem (67) erhalten werden.

8. Ein Verfahren gemäß Anspruch 7, bei dem die Kommunikationsinfrastruktur eine Zellularfunkinfrastruktur (10) ist und das Kommunikationsteilsystem der Ausrüstung eine Zellularfunkvorrichtung ist, wobei die Infrastruktur ein Ortsbestimmungssystem (67) zum Bestimmen des Orts der Zellularfunkvorrichtung und somit der Ausrüstung (70) aufweist und das entfernte Dienstsystem (40) die Gegenwärtiger-Ort-Daten direkt von dem Ortsbestimmungssystem (67) erhält.

9. Ein Verfahren gemäß einem der Ansprüche 1 bis 3, bei dem die Ausrüstung (70) ein Kommunikationsteilsystem aufweist, das es derselben ermöglicht, mit einem entfernten Dienstsystem (40) über eine Kommunikationsinfrastruktur (10) zu kommunizieren; wobei die Autorisierter-Ort-Daten an dem Dienstsystem (40) gespeichert sind (42) und gegenüber Ausrüstungsidentitätsinformation wiedergewonnen werden, die über die Kommunikationsinfrastruktur empfangen werden, und Schritt a) ii) an dem entfernten Dienstsystem (40) ausgeführt wird, wobei die Gegenwärtiger-Ort-Daten entweder durch die Ausrüstung (70) erhalten und an das Dienstsystem (40) weitergeleitet oder durch das Dienstsystem von einem separaten Ortsentdeckungssystem (67) erhalten werden.

10. Ein Verfahren gemäß Anspruch 9, bei dem die Kommunikationsinfrastruktur (10) eine Zellularfunkinfrastruktur ist und das Kommunikationsteilsystem der Ausrüstung (70) eine Zellularfunkvorrichtung ist, wobei die Infrastruktur ein Ortsbestimmungssystem (67) zum Bestimmen des Orts der Zellularfunkvorrichtung und somit der Ausrüstung (70) aufweist und das entfernte Dienstsystem (40) die Gegenwärtiger-Ort-Daten direkt von dem Ortsbestimmungssystem (67) erhält.

11. Ein Verfahren gemäß einem der vorherigen Ansprüche, bei dem die Autorisierte-Personen-Daten in der Ausrüstung (70) selbst gespeichert sind (74) und Schritt b) an der Ausrüstung ausgeführt wird.

12. Ein Verfahren gemäß Anspruch 11, bei dem die Autorisierte-Personen-Daten durch eine geeignet autorisierte Person, die sich an der Ausrüstung befindet, oder entfernt über eine Kommunikationsverbindung modifizierbar sind.

13. Ein Verfahren gemäß einem der Ansprüche 1 bis 10, bei dem die Autorisierte-Personen-Daten in einem entfernten Dienstsystem (40) gespeichert sind, wobei die Ausrüstung (70) ein Kommunikationsteilsystem aufweist, das es derselben ermöglicht, mit dem Dienstsystem über eine Kommunikationsinfrastruktur (10) zu kommunizieren, um dadurch die Autorisierte-Personen-Daten zu empfangen und Schritt b) an der Ausrüstung auszuführen.

14. Ein Verfahren gemäß Anspruch 2 oder einem der Ansprüche 4 bis 10, wenn dieselben abhängig von Anspruch 2 sind, bei dem die Ausrüstung (70) ein Kommunikationsteilsystem aufweist, das es derselben ermöglicht, mit einem entfernten Dienstsystem (40) über eine Kommunikationsinfrastruktur (10) zu kommunizieren, wobei die Autorisierte-Personen-Daten an der Ausrüstung gespeichert sind (74) und über die Kommunikationsinfrastruktur an das Dienstsystem weitergeleitet werden, und Schritt b) an dem entfernten Dienstsystem (40) ausgeführt wird, wobei Ortsinformationen über autorisierte Personen durch das Dienstsystem von einem Ortsentdekkungssystem (67) erhalten werden.

15. Ein Verfahren gemäß Anspruch 14, bei dem die Kommunikationsinfrastruktur eine Zellularfunkinfrastruktur (10) ist und jeweilige zugeordnete Zellularfunkvorrichtungen (50) für autorisierte Personen (77) bereitgestellt werden, wobei die Infrastruktur ein Ortsbestimmungssystem (67) zum Bestimmen des Orts der Zellularfunkvorrichtungen und somit der autorisierten Personen aufweist und das entfernte Dienstsystem (40) Schritt b) durch ein Erhalten der Gegenwärtiger-Ort-Daten von dem Ortsbestimmungssystem (67) ausführt.

16. Ein Verfahren gemäß Anspruch 2 oder einem der Ansprüche 4 bis 10, wenn dieselben abhängig von Anspruch 2 sind, bei dem die Ausrüstung (70) ein Kommunikationsteilsystem aufweist, das es derselben ermöglicht, mit einem entfernten Dienstsystem (40) über eine Kommunikationsinfrastruktur (10) zu kommunizieren, wobei die Autorisierte-Personen-Daten an dem Dienstsystem (40) gespeichert sind (45) und gegenüber Ausrüstungsidentitätsinformation, die über die Kommunikationsinfrastruktur empfangen werden, wiedergewonnen werden und Schritt b) an dem entfernten Dienstsystem (40) ausgeführt wird, wobei Ortsinformationen über autorisierte Personen durch das Dienstsystem von einem Ortsentdekkungssystem (67) erhalten werden.

17. Ein Verfahren gemäß Anspruch 16, bei dem die Kommunikationsinfrastruktur eine Zellularfunkinfrastruktur (10) ist und jeweilige zugeordnete Zellularfunkvorrichtungen (50) für autorisierte Personen (77) bereitgestellt werden, wobei die Infrastruktur ein Ortsbestimmungssystem (67) zum Bestimmen des Orts der zellularen Funkvorrichtungen und somit der autorisierten Personen aufweist und das entfernte Dienstsystem Schritt b) durch ein Erhalten der Gegenwärtiger-Ort-Daten von dem Ortsbestimmungssystem ausführt.

18. Ein Verfahren gemäß Anspruch 2, bei dem die Ausrüstung (70) ein Kommunikationsteilsystem aufweist, das es derselben ermöglicht, mit einem entfernten Dienstsystem (40) über eine Kommunikationsinfrastruktur (10) zu kommunizieren, wobei die Autorisierter-Ort-Daten und die Autorisierte-Personen-Daten an dem Dienstsystem gespeichert sind und gegenüber Ausrüstungsidentitätsinformationen wiedergewonnen werden, die über die Kommunikationsinfrastruktur empfangen werden, und die Schritte a) ii) und b) an dem entfernten Dienstsystem (40) ausgeführt werden.

19. Ein Verfahren gemäß Anspruch 18, bei dem die Kommunikationsinfrastruktur eine Zellularfunkinfrastruktur (10) ist und jeweilige zugeordnete Zellularfunkvorrichtungen (50) für autorisierte Personen (77) bereitgestellt werden, wobei das Kommunikationsteilsystem der Ausrüstung (70) auch eine Zellularfunkvorrichtung ist und die Infrastruktur ein Ortsbestimmungssystem (67) zum Bestimmen des Orts der Zellularfunkvorrichtungen und somit der Ausrüstung und von autorisierten Personen aufweist, und wobei das entfernte Dienstsystem (40) Schritt b) durch ein Erhalten der Gegenwärtiger-Ort-Daten und von Ortsinformationen über autorisierte Personen von dem Ortsbestimmungssystem (67) ausführt.

20. Eine Anordnung zum Freigeben einer bestimmten Funktionalität eines Ausrüstungsgegenstandes (70) daraufhin, daß ein Satz von Bedingungen erfüllt ist, wobei dieser Satz von Bedingungen sowohl eine Ortsbedingung als auch eine Personenbedingung umfaßt, wobei die Anordnung folgende Merkmale aufweist:
- eine erste Bedingungsprüfeinrichtung zum automatischen Prüfen der Ortsbedingung, wobei die erste Bedingungsprüfeinrichtung folgende Merkmale aufweist:
- einen Ortsdatenspeicher (42; 74) zum Speichern von Autorisierter-Ort-Daten, die einen vorbestimmten autorisierten Ort oder eine Lokalität für eine Operation der Funktionalität der Ausrüstung (70) darstellen,
- eine Gegenwärtiger-Ort-Einrichtung (67; 75) zum Erhalten von Gegenwärtiger-Ort-Daten, die den gegenwärtigen Ort der Ausrüstung (70) darstellen; und
- eine Ortsvergleichseinrichtung (43; 76) zum Vergleichen der Gegenwärtiger-Ort-Daten mit den gespeicherten Autorisierter-Ort-Daten;
- eine zweite Bedingungsprüfeinrichtung (44, 79) zum automatischen Prüfen der Personenbedingung, wobei die zweite Bedingungsprüfeinrichtung einen Speicher (45, 74) für Autorisierte-Personen-Daten umfaßt, die eine spezifizierte Person oder Personen oder eine spezifische Klasse von Personen identifizieren; und
- eine Freigabeeinrichtung (41; 78), die angeordnet ist, um eine Freigabe der bestimmten Funktionalität der Ausrüstung (70) daraufhin zu bewirken, daß sowohl die erste als auch die zweite Bedingungsprüfeinrichtung jeweils anzeigt, daß die durch dieselbe ausgeführte Bedingungsprüfung erfüllt ist;
**dadurch gekennzeichnet, daß** die zweite Bedingungsprüfeinrichtung (44; 79) angeordnet ist, um mindestens die Präsenz einer Person (77), die auf die gespeicherten Autorisierte-Personen-Daten paßt, nahe der Ausrüstung (70) oder an dem autorisierten Ort oder der Lokalität, einschließlich Orten, die keine Ausrüstungsbetriebspositionen sind, zu prüfen.

21. Eine Anordnung gemäß Anspruch 20, wobei die Anordnung an der Ausrüstung (70) vorgesehen ist.

22. Eine Anordnung gemäß Anspruch 20, wobei die Anordnung an einem Dienstsystem (40) vorgesehen ist und ferner eine Kommunikationseinrichtung zum Weiterleiten von Freigabesignalen von der Freigabeeinrichtung (41) zu der Ausrüstung (70) aufweist, um die bestimmte Funktionalität der Ausrüstung (70) freizugeben.

23. Eine Anordnung gemäß Anspruch 20, bei der die Elemente, die die Anordnung bilden, zwischen der Ausrüstung (70) und einem Dienstsystem (40) verteilt sind, wobei die Anordnung ferner eine Kommunikationseinrichtung zum Verbinden der Ausrüstung (70) und des Dienstsystems (40) miteinander aufweist.

24. Eine Anordnung gemäß Anspruch 20, bei der die zweite Bedingungsprüfeinrichtung (44) eine Einrichtung zum Erhalten von Ortsdaten über Personen (77), die durch die Autorisierte-Personen-Daten abgedeckt sind, und eine Einrichtung zum Vergleichen dieser Daten entweder mit dem gegenwärtigen Ort der Ausrüstung (70) oder mit den Autorisierter-Ort-Daten aufweist.

25. Eine Anordnung gemäß Anspruch 20, bei der die zweite Bedingungsprüfeinrichtung (79) ein Nahbereichskommunikationssystem, das auf der Ausrüstung (70) positioniert und angeordnet ist, um Identitätsinformationen über in der Nähe befindliche Personen (77) zu bestimmen, und eine Einrichtung zum Vergleichen dieser Identitätsinformationen gegenüber den Autorisierte-Personen-Daten aufweist.

## Revendications

1. Procédé de commande pour autoriser une fonctionnalité particulière d'un élément d'équipement (70) selon un ensemble de conditions satisfaites, cet ensemble de conditions comprenant, à la fois, une condition de position et une condition de personnel, procédé comprenant :
a) le contrôle automatique de la condition de position par :
1) obtention (67 ; 75) des données de position en cours représentant la position en cours de l'équipement (70) ; et
2) comparaison (43 ; 76) des données de position en cours avec des données stockées de position autorisée représentant une position ou une localisation autorisée prédéterminée pour un fonctionnement de ladite fonctionnalité de l'équipement (70) ;
b) le contrôle automatique de la condition de personnel ;
**caractérisé en ce que** l'étape b) comprend la vérification (44 ; 79) de la présence près de l'équipement (70) ou dans ladite position ou localisation autorisée, y compris dans des positions qui ne sont pas des positions fonctionnelles de l'équipement (70), d'au moins une personne (77) correspondant à des données stockées de personnel autorisé identifiant une ou des personnes spécifiées ou une qualification spécifiée de la personne.

2. Procédé selon la revendication 1, selon lequel l'étape b) est effectuée par obtention (67) de données de position sur des personnes (77) couvertes par les données de personnel autorisé (45) et par comparaison de ces données soit avec la position en cours de l'équipement (70), soit avec lesdites données de position autorisée (42).

3. Procédé selon la revendication 1, selon lequel l'étape b) est effectuée à l'aide d'un système de communication de courte portée situé sur l'équipement (70) pour déterminer une information d'identité sur des personnes voisines (77), cette information d'identité étant alors comparée (79) avec les données de personnel autorisé.

4. Procédé selon l'une quelconque des revendications précédentes, selon lequel les données de position autorisée sont stockées (74) dans l'équipement (70) lui-même, l'équipement (70) déterminant ou ayant reçu lesdites données de position en cours et l'étape secondaire a) 2) étant effectuée sur l'équipement.

5. Procédé selon la revendication 4, selon lequel les données de position autorisée sont modifiables par une personne autorisée, de façon adaptée, attenante à l'équipement ou à distance sur une liaison de communication.

6. Procédé selon l'une quelconque des revendications 1 à 3, selon lequel les données de position autorisée sont stockées (42) dans un système de service à distance (40), l'équipement possédant un système secondaire de communication lui permettant de communiquer avec le système de service (40) par l'intermédiaire d'une infrastructure de communication (10) pour recevoir ainsi lesdites données de position autorisée et pour les comparer (43 ; 76) sur l'équipement (70) avec des données de position en cours déterminées ou obtenues par l'équipement.

7. Procédé selon l'une quelconque des revendications 1 à 3, selon lequel l'équipement (70) possède un système secondaire de communication lui permettant de communiquer avec un système de service à distance (40) par l'intermédiaire d'une infrastructure de communication (10), les données de position autorisée étant stockées (74) sur l'équipement (70) et étant passées dans le système de service (40) par l'intermédiaire de l'infrastructure de communication (10), et l'étape a) 2) étant effectuée sur le système de service à distance (40) avec les données de position en cours obtenues soit par l'équipement (70) et passées dans le système de service, soit par le système de service (40) à partir d'un système séparé de reconnaissance de position (67).

8. Procédé selon la revendication 7, selon lequel l'infrastructure de communication est une infrastructure radio cellulaire (10) et le système secondaire de communication de l'équipement est un dispositif radio cellulaire, l'infrastructure possédant un système de détermination de position (67) pour déterminer la position du dispositif radio cellulaire et ainsi de l'équipement (70) et le système de service à distance (40) obtenant lesdites données de position en cours à partir directement du système de détermination de position (67).

9. Procédé selon l'une quelconque des revendications 1 à 3, selon lequel l'équipement (70) possède un système secondaire de communication lui permettant de communiquer avec un système de service à distance (40) par l'intermédiaire d'une infrastructure de communication (10), les données de position autorisée étant stockées (42) sur le système de service (40) et étant extraites de l'information d'identité d'équipement reçue par l'intermédiaire de l'infrastructure de communication, et l'étape a) 2) étant effectuée sur le système de service à distance (40) avec les données de position en cours obtenues soit par l'équipement (70) et passées dans le système de service (40), soit par le système de service à partir d'un système séparé de reconnaissance de position (67).

10. Procédé selon la revendication 9, selon lequel l'infrastructure de communication (10) est une infrastructure radio cellulaire et le système secondaire de communication de l'équipement (70) est un dispositif radio cellulaire, l'infrastructure possédant un système de détermination de position (67) pour déterminer la position du dispositif radio cellulaire et ainsi de l'équipement (70) et le système de service à distance (40) obtenant lesdites données de position en cours à partir directement du système de détermination de position (67).

11. Procédé selon l'une quelconque des revendications précédentes, selon lequel les données de personnel autorisé sont stockées (74) dans l'équipement (70) lui-même et l'étape b) est effectuée sur l'équipement.

12. Procédé selon la revendication 11, selon lequel les données de personnel autorisé sont modifiables par une personne autorisée adéquate attenante à l'équipement ou à distance sur une liaison de communication.

13. Procédé selon l'une quelconque des revendications 1 à 10, selon lequel les données de personnel autorisé sont stockées dans un système de service à distance (40), l'équipement (70) possédant un système secondaire de communication lui permettant de communiquer avec le système de service par l'intermédiaire d'une infrastructure de communication (10) pour recevoir ainsi lesdites données de personnel autorisé et pour effectuer l'étape b) sur l'équipement.

14. Procédé selon la revendication 2 ou l'une quelconque des revendications 4 à 10 lorsque dépendantes de la revendication 2, selon lequel l'équipement (70) possède un système secondaire de communication lui permettant de communiquer avec un système de service à distance (40) par l'intermédiaire d'une infrastructure de communication (10), les données de personnel autorisé étant stockées (74) sur l'équipement et étant passées dans le système de service par l'intermédiaire de l'infrastructure de communication, et l'étape b) étant effectuée sur le système de service à distance (40) avec l'information de position sur le personnel autorisé obtenue par le système de service à partir d'un système séparé de reconnaissance de position (67).

15. Procédé selon la revendication 14, selon lequel l'infrastructure de communication est une infrastructure radio cellulaire (10) et le personnel autorisé (77) est muni de dispositifs radio cellulaires associés respectifs (50), l'infrastructure possédant un système de détermination de position (67) pour déterminer la position des dispositifs radio cellulaires et ainsi du personnel autorisé, et le système de service à distance (40) effectuant l'étape b) par obtention desdites données de position en cours à partir directement du système de détermination de position (67).

16. Procédé selon la revendication 2 ou l'une quelconque des revendications 4 à 10 lorsque dépendantes de la revendication 2, selon lequel l'équipement (70) possède un système secondaire de communication lui permettant de communiquer avec un système de service à distance (40) par l'intermédiaire d'une infrastructure de communication (10), les données de personnel autorisé étant stockées (45) sur le système de service (40) et étant extraites de l'information d'identité d'équipement reçue par l'intermédiaire de l'infrastructure de communication, et l'étape b) étant effectuée sur le système de service à distance (40) avec l'information de position sur le personnel autorisé obtenue par le système de service à partir d'un système séparé de reconnaissance de position (67).

17. Procédé selon la revendication 16, selon lequel l'infrastructure de communication est une infrastructure radio cellulaire (10) et le personnel autorisé (77) est muni de dispositifs radio cellulaires associés respectifs (50), l'infrastructure possédant un système de détermination de position (67) pour déterminer la position des dispositifs radio cellulaires et ainsi du personnel autorisé, et le système de service à distance effectuant l'étape b) par obtention desdites données de position en cours à partir du système de détermination de position.

18. Procédé selon la revendication 2, selon lequel l'équipement (70) possède un système secondaire de communication lui permettant de communiquer avec un système de service à distance (40) par l'intermédiaire d'une infrastructure de communication (10), les données de position autorisée et les données de personnel autorisé étant stockées sur le système de service et étant extraites de l'information d'identité d'équipement reçue par l'intermédiaire de l'infrastructure de communication, et les étapes a) 2) et b) étant effectuées sur le système de service à distance (40).

19. Procédé selon la revendication 18, selon lequel l'infrastructure de communication est une infrastructure radio cellulaire (10) et le personnel autorisé (77) est muni de dispositifs radio cellulaires respectifs associés (50), le système secondaire de communication de l'équipement (70) étant, de même, un dispositif radio cellulaire, et l'infrastructure possédant un système de détermination de position (67) pour déterminer la position des dispositifs radio cellulaires et ainsi de l'équipement et du personnel autorisé, et le système de service à distance (40) effectuant l'étape b) par obtention desdites données de position en cours et de l'information de position sur le personnel autorisé à partir du système de détermination de position (67).

20. Agencement pour autoriser une fonctionnalité particulière d'un élément d'équipement (70) dans un ensemble de conditions satisfaites, cet ensemble de conditions comprenant, à la fois, une condition de position et une condition de personnel, l'agencement comprenant :
- un premier moyen de contrôle de condition pour vérifier de façon automatique la condition de position, le premier moyen de contrôle de condition comprenant :
- un stockage de données de position (42 ; 74) pour stocker des données de position autorisée représentant une position ou une localisation prédéterminée autorisée pour un fonctionnement de ladite fonctionnalité de l'équipement (70) ;
- un moyen de position en cours (67 ; 75) pour l'obtention de données de position en cours représentant la position en cours de l'équipement (70) ; et
- un moyen de comparaison de position (43 ; 76) pour comparer les données de position en cours avec lesdites données stockées de position autorisée ;
- un second moyen de contrôle de condition (44, 79) pour vérifier, de façon automatique, la condition de personnel, le second moyen de contrôle de condition comprenant un stockage (45, 74) pour des données de personnel autorisé identifiant une ou des personnes spécifiées ou une qualification spécifiée de personnel ; et
- un moyen de validation (41 ; 78) prévu pour déclencher la validation de ladite fonctionnalité particulière de l'équipement (70) lorsque les premier et second moyens de contrôle de condition indiquent chacun que la vérification de condition effectuée est satisfaite ;
**caractérisé en ce que** le second moyen de contrôle de condition (44 ; 79) est prévu pour vérifier la présence près de l'équipement (70) ou dans ladite position ou localisation autorisée, y compris dans des positions qui ne sont pas des positions fonctionnelles de l'équipement, d'au moins une personne (77) correspondant aux données stockées de personnel autorisé.

21. Agencement selon la revendication 20, dans lequel l'agencement est prévu sur ledit équipement (70).

22. Agencement selon la revendication 20, dans lequel l'agencement est prévu dans un système de service (40) et comprend de plus un moyen de communication pour faire passer des signaux de validation dudit moyen de validation (41) audit équipement (70) pour autoriser ladite fonctionnalité particulière de l'équipement (70).

23. Agencement selon la revendication 20, dans lequel les éléments constituant ledit agencement sont répartis entre l'équipement (70) et un système de service (40), l'agencement comprenant, de plus, un moyen de communication pour une communication entre l'équipement (70) et le système de service (40).

24. Agencement selon la revendication 20, dans lequel le second moyen de contrôle de condition (44) comprend un moyen pour obtenir des données de position sur des personnes (77) couvertes par les données de personnel autorisé, et un moyen pour comparer ces données avec soit la position en cours de l'équipement (70), soit lesdites données de position autorisée.

25. Agencement selon la revendication 20, dans lequel le second moyen de contrôle de condition (79) comprend un système de communication de courte portée situé sur l'équipement (70) et prévu pour déterminer une information d'identité sur des personnes attenantes (77), et un moyen pour comparer cette information d'identité avec les données de personnel autorisé.
